# EUROPEAN PATENT APPLICATION

(11) **EP 4 692 872 A1**
(43) Date of publication of application: **11.02.2026**
(21) Application number: 24802598.3
(22) Date of filing: 13.03.2024
(51) Int. Cl.: G02B 6/02

(54) **HOLLOW-CORE OPTICAL FIBER AND OPTICAL TRANSMISSION SYSTEM**

(30) Priority: 10.05.2023 CN 202310525599; 07.11.2023 CN 202311478016
(71) Applicant: Huawei Technologies Co., Ltd., Shenzhen, Guangdong 518129 (CN); Jinan University, Tianhe District Guangzhou Guangdong 510632 (CN)
(72) Inventor: WANG, Yingying, Guangzhou, Guangdong 510632 (CN); GAO, Shoufei, Guangzhou, Guangdong 510632 (CN); CHEN, Hao, Guangzhou, Guangdong 510632 (CN); YANG, Haofan, Shenzhen, Guangdong 518129 (CN); ZHOU, Rui, Shenzhen, Guangdong 518129 (CN); TONG, Zhaoyang, Shenzhen, Guangdong 518129 (CN)
(74) Representative: Körber, Martin Hans
(86) International application number: PCT/CN2024/081309
(87) International publication number: WO 2024/230310

(57) **Abstract**

This application provides a hollow-core fiber, including N first tubular units, N second tubular units, and a protection sleeve. The N first tubular units are arranged circumferentially and abut against the protection sleeve. The N second tubular units are in one-to-one correspondence with the N first tubular units, and each of the N first tubular units is nested in a corresponding second tubular unit, to form, together with the second tubular unit, a cladding layer that confines light beam propagation within a fiber core. A cross section of the second tubular unit includes at least one arc structure, and a central angle of the arc structure is 180 degrees to 340 degrees. The cladding layer is constructed by using a microstructure unit including a single-layer arc or multi-layer arcs, to confine light beam propagation within the fiber core. In this case, a size of the fiber is effectively reduced while ensuring a low loss of the fiber, so that a hollow-core fiber structure in this application has good compatibility, and is applicable to wider application scenarios.

## Description

This application claims priority to Chinese Patent Application No. 202310525599.X, filed with the China National Intellectual Property Administration on May 10, 2023 and entitled "HOLLOW-CORE FIBER AND OPTICAL TRANSMISSION SYSTEM", which is incorporated herein by reference in its entirety.

This application claims priority to Chinese Patent Application No. 202311478016.9, filed with the China National Intellectual Property Administration on November 7, 2023 and entitled "HOLLOW-CORE FIBER AND OPTICAL TRANSMISSION SYSTEM", which is incorporated herein by reference in its entirety.

### TECHNICAL FIELD

This application relates to the field of fiber communication technologies, and specifically, to a hollow-core fiber and an optical transmission system.

### BACKGROUND

A hollow-core fiber is a fiber that constructs a cladding layer by using a microstructure, to confine light propagation within the air in a hollow area. An anti-resonant hollow-core fiber uses a light-guiding mechanism of anti-resonant reflection to form a cladding layer by simply arranging geometric microstructure units. The anti-resonant hollow-core fiber has advantages of low transmission loss, flat dispersion, and high light-guiding energy density. However, in a design of the anti-resonant hollow-core fiber, to reduce a loss, complexity of a microstructure usually needs to be increased, which leads to an increased overall size of the fiber. As a result, the anti-resonant hollow-core fiber cannot be normally connected to a conventional fiber during actual application. Therefore, a hollow-core fiber structure is required to reduce a size of a fiber without increasing a transmission loss, and implement a normal connection to the conventional fiber.

### SUMMARY

This application provides a hollow-core fiber and an optical transmission system.

According to a first aspect, a hollow-core fiber is provided, and includes N first tubular units, N second tubular units, and a protection sleeve. The N first tubular units are arranged circumferentially and abut against the protection sleeve. The N second tubular units are in one-to-one correspondence with the N first tubular units, and each of the N first tubular units is nested in a corresponding second tubular unit, to form, together with the second tubular unit, a cladding layer that confines light beam propagation within a fiber core. A cross section of the second tubular unit includes at least one arc structure, a first endpoint and a second endpoint of each of the at least one arc structure are in contact with the protection sleeve, a central angle of the arc structure is 180 degrees to 340 degrees, and N is a positive integer greater than or equal to 5. In a hollow-core fiber structure in this application, the cladding layer is constructed by using a microstructure unit including a single-layer arc or multi-layer arcs, to confine light beam propagation within the fiber core. In this case, a size of the fiber is effectively reduced while ensuring a low loss of the fiber, so that the hollow-core fiber structure in this application has good compatibility, and is applicable to wider application scenarios.

With reference to the first aspect, in some implementations of the first aspect, the central angle of the arc structure is 180 degrees to 300 degrees. The cladding layer is constructed by using a microstructure unit including a single-layer arc or multi-layer arcs, to confine light beam propagation within the fiber core. In this case, a size of the fiber is effectively reduced while ensuring a low loss of the fiber, so that a hollow-core fiber structure in this application has good compatibility, and is applicable to wider application scenarios.

With reference to the first aspect, in some implementations of the first aspect, the central angle of the arc structure is 210 degrees to 270 degrees. When the second tubular unit includes one or more arc structures, a small size and a low loss of the fiber can be ensured.

With reference to the first aspect, in some implementations of the first aspect, the N first tubular units are arranged circumferentially and symmetrically, so that light propagation can be more effectively confined within the fiber core.

With reference to the first aspect, in some implementations of the first aspect, when the at least one arc structure includes a plurality of arc structures, there is a gap between any two adjacent arc structures in the plurality of arc structures. In this way, reduction in a loss of a silica mode (which may alternatively be understood as a light propagation path) caused by contact between the structures can be avoided, and an oscillation phenomenon that occurs in a loss spectrum of the fiber due to significant interaction between an air mode and the silica mode in the fiber core can be avoided.

With reference to the first aspect, in some implementations of the first aspect, a cross section of the first tubular unit includes one or more closed-shape structures. In this way, a closed structure is used to form a function similar to a resonant cavity, to reduce a fiber loss.

With reference to the first aspect, in some implementations of the first aspect, the cross section of the first tubular unit is of a circular structure. In this way, the first tubular unit forms the cladding layer together with the second tubular unit, to confine light beam propagation within the fiber core.

With reference to the first aspect, in some implementations of the first aspect, there is a spacing between adjacent second tubular units in the N second tubular units, and the spacing is less than or equal to half of an effective radius of the fiber core. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing.

With reference to the first aspect, in some implementations of the first aspect, there is a spacing between adjacent second tubular units in the N second tubular units, and the spacing is less than or equal to one-third of an effective radius of the fiber core. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing.

With reference to the first aspect, in some implementations of the first aspect, when the second tubular unit includes one arc structure, a radial spacing between the second tubular unit and the corresponding first tubular unit is greater than or equal to one-fifteenth of the effective radius of the fiber core, and is less than or equal to three-seconds of the effective radius of the fiber core; or when the second tubular unit includes a plurality of arc structures, a radial spacing between a first arc structure and a second arc structure is greater than or equal to one-fifteenth of the effective radius of the fiber core, and is less than or equal to three-seconds of the effective radius of the fiber core, where the first arc structure is adjacent to the fiber core, and the second arc structure is adjacent to the first arc structure. A relationship between the effective radius of the fiber core and the radial spacing between the second tubular unit and the first tubular unit corresponding to the second tubular unit in the hollow-core fiber is determined, so that a function of an anti-resonant reflection wall can be ensured, thereby effectively reducing light leakage.

With reference to the first aspect, in some implementations of the first aspect, when the second tubular unit includes one arc structure, a radial spacing between the second tubular unit and the corresponding first tubular unit is greater than or equal to one-sixth of the effective radius of the fiber core, and is less than or equal to half of the effective radius of the fiber core; or when the second tubular unit includes a plurality of arc structures, a radial spacing between a first arc structure and a second arc structure is greater than or equal to one-sixth of the effective radius of the fiber core, and is less than or equal to half of the effective radius of the fiber core, where the first arc structure is adjacent to the fiber core, and the second arc structure is adjacent to the first arc structure. A relationship between the effective radius of the fiber core and the radial spacing between the first arc structure and the second arc structure in the hollow-core fiber is determined, so that a function of an anti-resonant reflection wall can be ensured, thereby effectively reducing light leakage.

With reference to the first aspect, in some implementations of the first aspect, when the second tubular unit includes one arc structure, a spacing between the second tubular unit and the corresponding first tubular unit in a first direction is greater than or equal to one-eighth of the effective radius of the fiber core, and is less than or equal to three-quarters of the effective radius of the fiber core, where the first direction is perpendicular to a connection line between a circle center of the second tubular unit and a circle center of the corresponding first tubular unit, and a straight line in the first direction passes through the circle center of the first tubular unit; or when the second tubular unit includes a plurality of arc structures, a spacing between a first arc structure and a second arc structure in a second direction is greater than or equal to one-eighth of the effective radius of the fiber core, and is less than or equal to three-quarters of the effective radius of the fiber core, where the first arc structure is adjacent to the fiber core, the second arc structure is adjacent to the first arc structure, the second direction is perpendicular to a connection line between a circle center of the first arc structure and a circle center of the second arc structure, and a straight line in the second direction passes through the circle center of the second arc structure. A relationship between the effective radius of the fiber core and the spacing between the first arc structure and the second arc structure in the direction perpendicular to a radial direction is determined, so that a function of an anti-resonant reflection wall can be ensured, thereby effectively reducing light leakage.

With reference to the first aspect, in some implementations of the first aspect, when the second tubular unit includes one arc structure, a spacing between the second tubular unit and the corresponding first tubular unit in a first direction is greater than or equal to one-eighth of the effective radius of the fiber core, and is less than or equal to half of the effective radius of the fiber core, where the first direction is perpendicular to a connection line between a circle center of the second tubular unit and a circle center of the corresponding first tubular unit, and a straight line in the first direction passes through the circle center of the first tubular unit; or when the second tubular unit includes a plurality of arc structures, a spacing between a first arc structure and a second arc structure in a second direction is greater than or equal to one-eighth of the effective radius of the fiber core, and is less than or equal to half of the effective radius of the fiber core, where the first arc structure is adjacent to the fiber core, the second arc structure is adjacent to the first arc structure, the second direction is perpendicular to a connection line between a circle center of the first arc structure and a circle center of the second arc structure, and a straight line in the second direction passes through the circle center of the second arc structure. A relationship between the effective radius of the fiber core and the spacing between the first arc structure and the second arc structure in the direction perpendicular to a radial direction is determined, so that a function of an anti-resonant reflection wall can be ensured, thereby effectively reducing light leakage.

With reference to the first aspect, in some implementations of the first aspect, a cross section of the first tubular unit includes at least one arc structure. In this way, the first tubular unit forms the cladding layer together with the second tubular unit, to confine light beam propagation within the fiber core.

With reference to the first aspect, in some implementations of the first aspect, there is a spacing between adjacent second tubular units in the N second tubular units, and the spacing is less than or equal to half of an effective radius of the fiber core. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing.

With reference to the first aspect, in some implementations of the first aspect, a radial spacing between a first arc structure and a second arc structure is greater than or equal to one-fifth of the effective radius of the fiber core, and is less than or equal to three-seconds of the effective radius of the fiber core, where the first arc structure is adjacent to the fiber core, and the second arc structure is adjacent to the first arc structure. A relationship between the effective radius of the fiber core and the radial spacing between the first arc structure and the second arc structure in the hollow-core fiber is determined, so that a function of an anti-resonant reflection wall can be ensured, thereby effectively reducing light leakage.

With reference to the first aspect, in some implementations of the first aspect, a spacing between the first arc structure and the second arc structure in a second direction is greater than or equal to one-eighth of the effective radius of the fiber core, and is less than or equal to three-fifths of the effective radius of the fiber core, where the first arc structure is adjacent to the fiber core, and the second arc structure is adjacent to the first arc structure; and when a circle center of the second arc structure is within a range enclosed by the protection sleeve, the second direction is perpendicular to a connection line between a circle center of the first arc structure and the circle center of the second arc structure, and a straight line in the second direction passes through the circle center of the second arc structure; or when a circle center of the second arc structure is outside a range enclosed by the protection sleeve, in a straight line perpendicular to a connection line between a circle center of the first arc structure and the circle center of the second arc structure, there is a shortest distance between an intersection point of a straight line in the second direction and the first arc structure and an intersection point of the straight line in the second direction and the second arc structure. A relationship between the effective radius of the fiber core and the spacing between the first arc structure and the second arc structure in the direction perpendicular to a radial direction is determined, so that a function of an anti-resonant reflection wall can be ensured, thereby effectively reducing light leakage.

With reference to the first aspect, in some implementations of the first aspect, a difference between wall thicknesses of the first tubular unit and the second tubular unit is within 10%. Wall thicknesses of unit structures in the fiber are kept as uniform as possible, so that a hollow-core fiber structure in this application is actually implemented by using a fiber drawing method that is based on hydrodynamics and thermodynamics.

According to a second aspect, an optical transmission system is provided, and includes: an optical transmitter, configured to transmit signal light; the hollow-core fiber according to the first aspect and the implementations of the first aspect, configured to transmit the signal light; and an optical receiver, configured to receive the signal light.

### BRIEF DESCRIPTION OF DRAWINGS

FIG. 1 is a diagram of a hollow-core fiber structure according to an embodiment of this application;
FIG. 2 is a diagram of another hollow-core fiber structure according to an embodiment of this application;
FIG. 3 is a diagram of a structure of a cross section of a fiber according to an embodiment of this application;
FIG. 4 is a diagram of a hollow-core fiber structure in which a single-layer arc structure in a second tubular unit is adjusted according to an embodiment of this application;
FIG. 5 shows a loss spectrum corresponding to hollow-core fiber structure adjustment according to an embodiment of this application;
FIG. 6 is another diagram of a hollow-core fiber structure in which an arc structure in a second tubular unit is adjusted according to an embodiment of this application;
FIG. 7 shows another loss spectrum corresponding to hollow-core fiber structure adjustment according to an embodiment of this application;
FIG. 8 is another diagram of a hollow-core fiber structure in which an arc structure in a second tubular unit is adjusted according to an embodiment of this application;
FIG. 9 shows another loss spectrum corresponding to hollow-core fiber structure adjustment according to an embodiment of this application;
FIG. 10 is another diagram of adjusting a hollow-core fiber structure according to an embodiment of this application;
FIG. 11 shows another loss spectrum corresponding to hollow-core fiber structure adjustment according to an embodiment of this application;
FIG. 12 is a diagram of an optimization principle of a hollow-core fiber structure according to an embodiment of this application;
FIG. 13 is a diagram of a method for preparing a hollow-core fiber according to an embodiment of this application;
FIG. 14 is a diagram of an application scenario of a hollow-core fiber according to an embodiment of this application;
FIG. 15 is a diagram of a structure of a cross section of a fiber according to an embodiment of this application;
FIG. 16 is a diagram of a structure of a cross section of another fiber according to an embodiment of this application;
FIG. 17 is a diagram of a hollow-core fiber structure in which an arc structure is adjusted according to an embodiment of this application;
FIG. 18 shows a loss spectrum corresponding to hollow-core fiber structure adjustment according to an embodiment of this application;
FIG. 19 is another diagram of a hollow-core fiber structure in which an arc structure is adjusted according to an embodiment of this application;
FIG. 20 shows a loss spectrum corresponding to hollow-core fiber structure adjustment according to an embodiment of this application;
FIG. 21 is another diagram of a hollow-core fiber structure in which an arc structure is adjusted according to an embodiment of this application;
FIG. 22 shows a loss spectrum corresponding to hollow-core fiber structure adjustment according to an embodiment of this application; and
FIG. 23 is a diagram of an optimization principle of a hollow-core fiber structure according to an embodiment of this application.

### DESCRIPTION OF EMBODIMENTS

The following describes technical solutions in this application with reference to accompanying drawings.

First, in the following embodiments of this application, terms such as "include", "have", and any variants thereof mean to cover a non-exclusive inclusion. For example, a process, method, system, product, or device that includes a series of steps or units is not necessarily limited to those steps or units that are expressly listed, but may include another step or unit not expressly listed or inherent to such a process, method, product, or device.

Second, in embodiments of this application, the term such as "example" or "for example" is used to represent giving an example, an illustration, or a description. An embodiment or a design scheme described with "example" or "for example" should not be explained as being more preferred or having more advantages than another embodiment or design scheme. The term such as "example" or "for example" is used to present a related concept in a specific manner for ease of understanding.

Third, in the following text descriptions or accompanying drawings in embodiments of this application, terms such as "first" and "second" and various numbers are merely used for differentiation for ease of description, but do not necessarily describe a specific order or sequence, and are not intended to limit the scope of embodiments of this application. For example, in embodiments of this application, the terms are used to distinguish between different transceivers.

A hollow-core fiber is a fiber that constructs a cladding layer by using a microstructure, to confine light propagation within the air in a hollow area. An anti-resonant hollow-core fiber uses a light-guiding mechanism of anti-resonant reflection to form a cladding layer by simply arranging geometric microstructure units. A radial cross section of the geometric microstructure unit may be considered as a resonant cavity. A quantity, shapes, and wall thicknesses of the geometric microstructure units are designed for the anti-resonant hollow-core fiber, so that a wavelength that does not meet a resonance condition in a light beam cannot enter the cladding layer, is reflected at an interface of the cladding layer, and is confined to propagate within the air in a hollow area. The anti-resonant hollow-core fiber has advantages of low transmission loss, flat dispersion, and high light-guiding energy density. The hollow area enclosed and limited by the geometric microstructure unit or a central air hole may also be understood as a fiber core of the hollow-core fiber.

However, in a design of the anti-resonant hollow-core fiber, to reduce a loss, complexity of a microstructure usually needs to be increased, which leads to an increased overall size of the fiber. For example, during the structure design, the fiber core (which may alternatively be understood as the hollow area) is designed to be 30 µm, and microstructures are designed to be five nested tube structures arranged around the fiber core. Although the fiber loss can be actually proved to be reduced to 0.2 dB/km, an overall diameter of a structure is increased to 90 µm. After a protection sleeve is added outside the microstructure, a size of the overall structure of the fiber is easily increased to more than 200 µm. However, a diameter of a conventional communication fiber is 125 µm, and the anti-resonant hollow-core fiber cannot be normally connected to the conventional fiber during actual application. Therefore, a hollow-core fiber structure is required to reduce a size of a fiber without increasing a transmission loss, and implement a normal connection to the conventional fiber.

Based on the foregoing problems, this application provides a hollow-core fiber and an optical transmission system. A cladding layer is constructed by using a microstructure unit including a single-layer arc or multi-layer arcs, to confine light beam propagation within a fiber core. In this case, a size of the fiber is effectively reduced while ensuring a low loss of the fiber, so that a hollow-core fiber structure in this application has good compatibility, and is applicable to wider application scenarios.

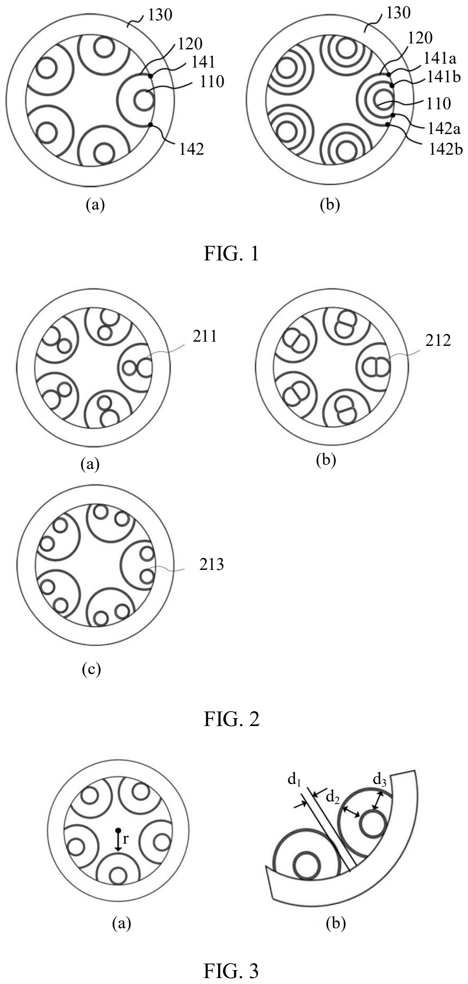

FIG. 1 is a diagram of a hollow-core fiber structure according to an embodiment of this application. As shown in FIG. 1, a hollow-core fiber includes N first tubular units 110, N second tubular units 120, and a protection sleeve 130, as shown by a radial cross section of the fiber.

The N first tubular units 110 are arranged circumferentially and abut against the protection sleeve 130. In some implementations, the N first tubular units 110 are arranged circumferentially and symmetrically, so that light propagation can be more effectively confined within a fiber core.

The N second tubular units 120 are in one-to-one correspondence with the N first tubular units 110. Each first tubular unit 110 is nested in a corresponding second tubular unit 120, to form a microstructure unit and form a cladding layer together with the second tubular unit 120, so as to confine light beam propagation within the fiber core of the fiber.

A cross section shape of the first tubular unit may be designed with reference to an actual situation, for example, the fiber core, a refractive index of the cladding layer, and an optical transmission mode. A radial cross section of the first tubular unit may include a straight wall and/or a curved wall, or may include a closed structure encircled by the straight wall and/or the curved wall, a circular structure shown in FIG. 1, or the like. This is not limited in this application. In some implementations, the cross section of the first tubular unit includes one or more closed-shape structures, so that a closed structure is used to form a function similar to a resonant cavity, to reduce a fiber loss.

FIG. 2 is a diagram of another hollow-core fiber structure according to an embodiment of this application. For example, a cross section of a first tubular unit may be shown by 211 in (a) in FIG. 2, and includes one circular structure and one arc structure. The circular structure and the arc structure are in contact with each other. Alternatively, a cross section of a first tubular unit may be shown by 212 in (b) in FIG. 2, and includes two circular structures that are in contact with each other. In some implementations, when the first tubular unit includes a plurality of structures, there is a gap between a plurality of structures nested in a same second tubular unit. For example, as shown by 213 in (c) in FIG. 2, the first tubular unit includes two circular structures, and there is a gap between the two circular structures. The plurality of structures in the first tubular unit are designed to be in a non-contact mode, so that reduction in a loss of a silica mode (which may alternatively be understood as a light propagation path) caused by contact between the structures can be avoided, and an oscillation phenomenon that occurs in a loss spectrum of a fiber due to significant interaction between an air mode and the silica mode in a fiber core can be avoided. Therefore, light transmission with a wide band and a low loss in the fiber can be implemented.

A cross section of the second tubular unit includes at least one arc structure. The second tubular unit may specifically include one arc structure, as shown in (a) in FIG. 1. In the second tubular unit, a first endpoint 141 and a second endpoint 142 of each arc structure are in contact with a protection sleeve 130, a central angle of the arc structure is 180 degrees to 300 degrees, and N is a positive integer greater than or equal to 5. Alternatively, the second tubular unit may include a plurality of arc structures, as shown in (b) in FIG. 1. In the second tubular unit, first endpoints 141a and 141b and second endpoints 142a and 142b of all of the arc structures are in contact with a protection sleeve 130, a central angle of the arc structure is 180 degrees to 300 degrees, and N is a positive integer greater than or equal to 5. In some implementations, when the at least one arc structure includes a plurality of arc structures, there is a gap between any two adjacent arc structures in the plurality of arc structures. In this way, reduction in a loss of a silica mode (which may alternatively be understood as a light propagation path) caused by contact between the structures can be avoided, and an oscillation phenomenon that occurs in a loss spectrum of a fiber due to significant interaction between an air mode and the silica mode in a fiber core can be avoided.

In the hollow-core fiber structure shown in FIG. 1, the first tubular unit 110, the second tubular unit 120, and the protection sleeve 130 are tube layers with high refractive indexes, and specific materials may be selected from silica, soft glass, plastic, or the like. This is not limited in this application. The selected materials of the first tubular unit 110, the second tubular unit 120, and the protection sleeve 130 may be consistent, so that the refractive indexes of the first tubular unit 110, the second tubular unit 120, and the protection sleeve 130 are the same.

In some implementations, the N first tubular units 110 and the N second tubular units 120 corresponding to the N first tubular units 110 form N microstructure units, and cross section shapes of the N microstructure units may be the same or may be different based on a specific design. This is not limited in this application.

Setting of wall thicknesses of the first tubular unit 110 and the second tubular unit 120 should correspond to an operating wavelength of fiber transmission, and meet an anti-resonant reflection wall thickness. In some implementations, a difference between the wall thicknesses of the first tubular unit 110 and the second tubular unit 120 is within 10%. In other words, a ratio of the difference between the wall thicknesses of the first tubular unit and the second tubular unit to the wall thickness of the first tubular unit or the second tubular unit is within 10%. In some implementations, a wall thickness of the protection sleeve 130 is the same as the wall thicknesses of the first tubular unit 110 and the second tubular unit 120. In some implementations, in the first tubular unit 110 and the second tubular unit 120, curvature in each individual structure is the same. Wall thicknesses of unit structures in the fiber are kept as uniform as possible, so that the hollow-core fiber structure in this application is actually implemented by using a fiber drawing method that is based on hydrodynamics and thermodynamics. In some implementations, the difference between the wall thicknesses of the first tubular unit 110 and the second tubular unit 120 is within 5%, to further improve broadband light-guiding performance.

With reference to FIG. 3, the following describes a design of a hollow-core fiber structure in this application.

FIG. 3 is a diagram of a structure of a cross section of a fiber according to an embodiment of this application. For ease of description, an example in which a hollow-core fiber includes five microstructure units, each unit has a corresponding first tubular unit and a corresponding second tubular unit, and a radial cross section of the first tubular unit is specifically of a circular structure is used. (a) in FIG. 3 is a diagram of a structure of a radial cross section of the fiber, and (b) in FIG. 3 is a partially enlarged diagram of the structure of the radial cross section of the fiber. As shown in the figure, in a hollow-core fiber structure, an effective radius r (where the effective radius may be understood as a distance from a center of the fiber to a nearest point on the second tubular unit) of a fiber core, a spacing d₁ between adjacent second tubular units, a radial spacing d₂ between the second tubular unit and the first tubular unit corresponding to the second tubular unit, and a circumferential spacing d₃ between the second tubular unit and the first tubular unit corresponding to the second tubular unit may have the following relationships.
1. In a circumferential direction, 0<d₁≤r/3. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing. The circumferential direction may specifically be a circumferential direction of the overall structure of the hollow-core fiber. In some implementations, d₁≤r/4. In this case, light leakage from the spacing is further effectively suppressed. The circumferential direction is a "peripheral direction", that is, a direction around an axis of the fiber.
2. r/6≤d₂≤r/2. A relationship between the effective radius of the fiber core and the radial spacing between the second tubular unit and the first tubular unit corresponding to the second tubular unit in the hollow-core fiber is determined, so that a function of an anti-resonant reflection wall can be ensured, thereby effectively reducing light leakage. In some implementations, r/6≤d₂≤r/3. Therefore, the function of the anti-resonant reflection wall can be more effectively ensured. A radial direction is a direction passing through the axis of the fiber in a radial plane. Alternatively, a radial direction may be understood as a straight line direction along a diameter or a radius of the fiber, or a straight line direction perpendicular to the axis of the fiber.
3. r/8≤d₃≤r/2. A relationship between the effective radius of the fiber core and the circumferential spacing between the second tubular unit and the first tubular unit corresponding to the second tubular unit is determined, so that the function of the anti-resonant reflection wall can be ensured, thereby effectively reducing light leakage. The circumferential direction may specifically be the circumferential direction of the overall structure of the hollow-core fiber.

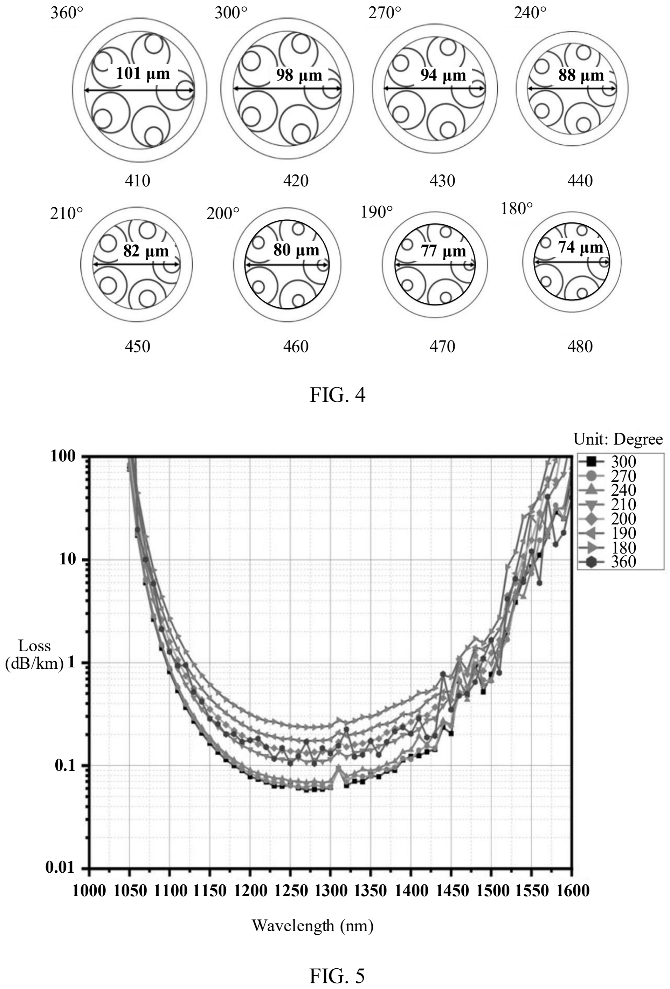

With reference to FIG. 4 to FIG. 12, the following specifically describes adjustment of a hollow-core fiber in this application. In this application, a size of the hollow-core fiber may be precisely adjusted by adjusting a central angle corresponding to an arc structure in a second tubular unit, to effectively reduce a size of the fiber while ensuring a low-loss advantage of the hollow-core fiber.

FIG. 4 is a diagram of a hollow-core fiber structure in which a single-layer arc structure in a second tubular unit is adjusted according to an embodiment of this application. A fiber core has a radius r of 15 µm and a diameter of 30 µm. A hollow-core fiber includes five microstructure units, and wall thicknesses of a first tubular unit and the second tubular unit each are 1 µm. A radial cross section of the first tubular unit includes one circular structure. A radial cross section of the second tubular unit includes one arc structure, that is, a single-layer arc structure. In FIG. 4, a central angle of a single-layer arc structure in a fiber structure 410 is 360°, and in this case, an overall diameter of a corresponding fiber is 101 µm; a central angle of a single-layer arc structure in a fiber structure 420 is 300°, and in this case, an overall diameter of a fiber is 98 µm; a central angle of a single-layer arc structure in a fiber structure 430 is 270°, and in this case, an overall diameter of a fiber is 94 µm; a central angle of a single-layer arc structure in a fiber structure 440 is 240°, and in this case, an overall diameter of a fiber is 88 µm; a central angle of a single-layer arc structure in a fiber structure 450 is 210°, and in this case, an overall diameter of a fiber is 82 µm; a central angle of a single-layer arc structure in a fiber structure 460 is 200°, and in this case, an overall diameter of a fiber is 80 µm; a central angle of a single-layer arc structure in a fiber structure 470 is 190°, and in this case, an overall diameter of a fiber is 77 µm; and a central angle of a single-layer arc structure in a fiber structure 480 is 180°, and in this case, an overall diameter of a fiber is 74 µm.

FIG. 5 shows a loss spectrum corresponding to hollow-core fiber structure adjustment according to an embodiment of this application. Corresponding to FIG. 4, when a central angle of the single-layer arc structure is 190° to 210°, a confinement loss less than 0.2 dB/km may be implemented in a band in which a light wavelength is 1180 nm to 1380 nm. In this case, the fiber structure meets an ultra-low loss fiber standard. When a central angle of the single-layer arc structure is 240° to 300°, a confinement loss less than 0.1 dB/km may be further implemented in a band in which a light wavelength is 1180 nm to 1380 nm.

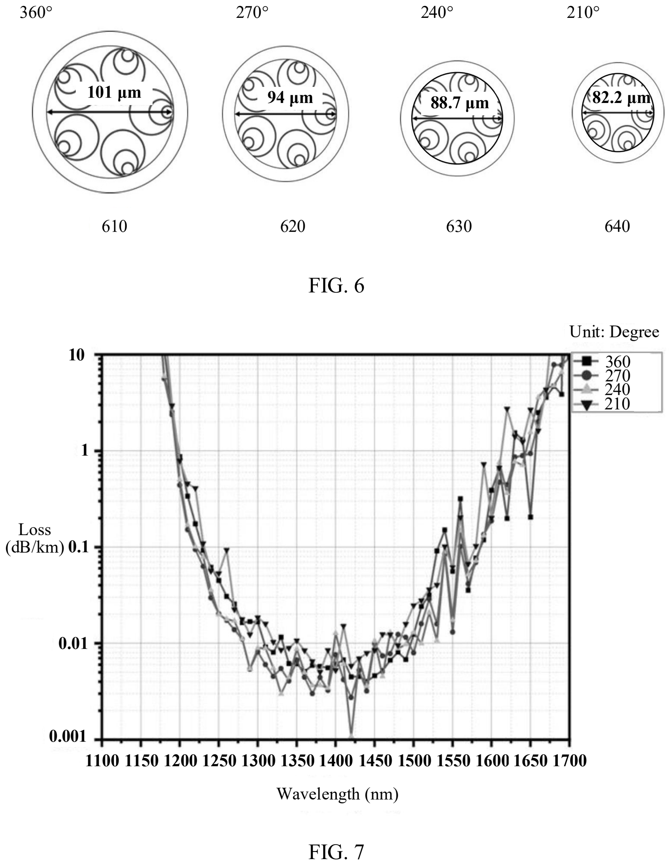

FIG. 6 is another diagram of a hollow-core fiber structure in which an arc structure in a second tubular unit is adjusted according to an embodiment of this application. A fiber core has a radius r of 15 µm and a diameter of 30 µm. A hollow-core fiber includes five microstructure units, and wall thicknesses of a first tubular unit and the second tubular unit each are 1 µm. A radial cross section of the first tubular unit includes two circular structures, one circular structure is nested in the other circular structure. A radial cross section of the second tubular unit includes one arc structure. In FIG. 6, a central angle of an arc structure in a fiber structure 610 is 360°, and in this case, an overall diameter of a corresponding fiber is 101 µm; a central angle of an arc structure in a fiber structure 620 is 270°, and in this case, an overall diameter of a fiber is 94 µm; a central angle of an arc structure in a fiber structure 630 is 240°, and in this case, an overall diameter of a fiber is 88.7 µm; and a central angle of an arc structure in a fiber structure 640 is 210°, and in this case, an overall diameter of a fiber is 82.2 µm.

FIG. 7 shows another loss spectrum corresponding to hollow-core fiber structure adjustment according to an embodiment of this application. Corresponding to FIG. 6, when a single-layer arc structure is 210° to 270°, a confinement loss less than 0.01 dB/km may be implemented in a band in which a light wavelength is 1180 nm to 1380 nm. If the central angle of the arc structure continues to decrease, for example, is less than 210°, the first tubular unit may be in contact with the second tubular unit. Therefore, this case is not considered anymore.

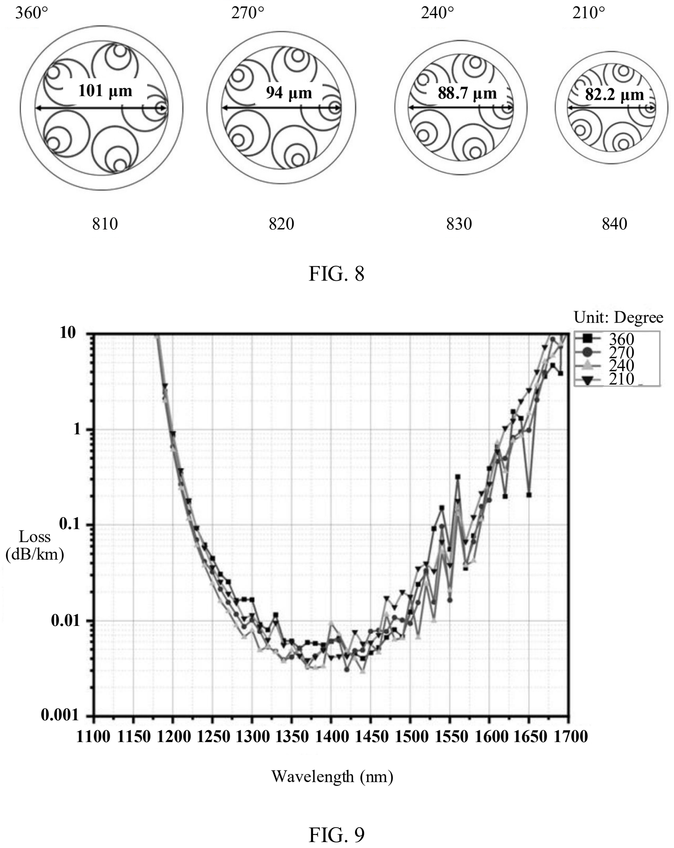

FIG. 8 is another diagram of a hollow-core fiber structure in which an arc structure in a second tubular unit is adjusted according to an embodiment of this application. A fiber core has a radius r of 15 µm and a diameter of 30 µm. A hollow-core fiber includes five microstructure units, and wall thicknesses of a first tubular unit and the second tubular unit each are 1 µm. A radial cross section of the first tubular unit includes one circular structure. A radial cross section of the second tubular unit includes two arc structures, that is, a two-layer arc structure. In FIG. 8, central angles of a two-layer arc structure in a fiber structure 810 are 360°, and in this case, an overall diameter of a corresponding fiber is 101 µm; central angles of a two-layer arc structure in a fiber structure 820 are 270°, and in this case, an overall diameter of a fiber is 94 µm; central angles of a two-layer arc structure in a fiber structure 830 are 240°, and in this case, an overall diameter of a fiber is 88.7 µm; and central angles of a two-layer arc structure in a fiber structure 840 are 210°, and in this case, an overall diameter of a fiber is 82.2 µm.

FIG. 9 shows another loss spectrum corresponding to hollow-core fiber structure adjustment according to an embodiment of this application. Corresponding to FIG. 8, when a two-layer arc structure is 210° to 270°, a confinement loss less than 0.01 dB/km may be implemented in a band in which a light wavelength is 1180 nm to 1380 nm. If central angles of the arc structures continue to decrease, for example, are less than 210°, the first tubular unit may be in contact with the second tubular unit. Therefore, this case is not considered anymore.

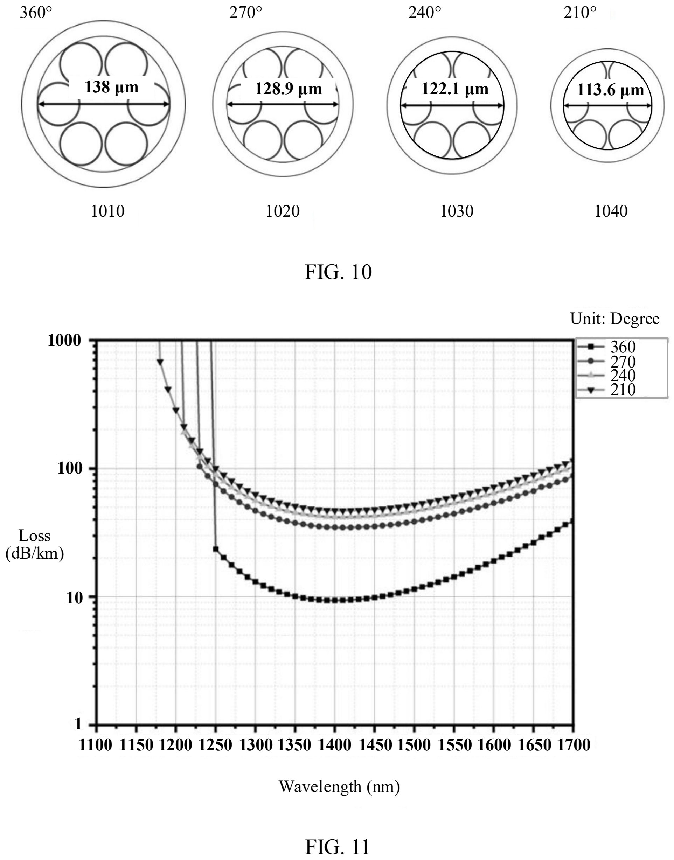

FIG. 10 is another diagram of adjusting a hollow-core fiber structure according to an embodiment of this application. As a comparison with embodiments in FIG. 4 to FIG. 9, a radius r of a fiber core is set to 25 µm and a diameter of the fiber core is set to 50 µm. A hollow-core fiber includes six microstructure units, where no first tubular unit is disposed, a radial cross section of a second tubular unit includes one arc structure, and a wall thickness of the second tubular unit is 1 µm. In FIG. 10, a central angle of an arc structure in a fiber structure 1010 is 360°, and in this case, an overall diameter of a corresponding fiber is 138 µm; a central angle of an arc structure in a fiber structure 1020 is 270°, and in this case, an overall diameter of a fiber is 128.9 µm; a central angle of an arc structure in a fiber structure 1030 is 240°, and in this case, an overall diameter of a fiber is 122.1 µm; and a central angle of an arc structure in a fiber structure 1040 is 210°, and in this case, an overall diameter of a fiber is 113.6 µm.

FIG. 11 shows another loss spectrum corresponding to hollow-core fiber structure adjustment according to an embodiment of this application. Corresponding to FIG. 10 and compared with embodiments in FIG. 4 to FIG. 9, in FIG. 11, after the first tubular unit is not disposed, a loss trend shows a significant increase.

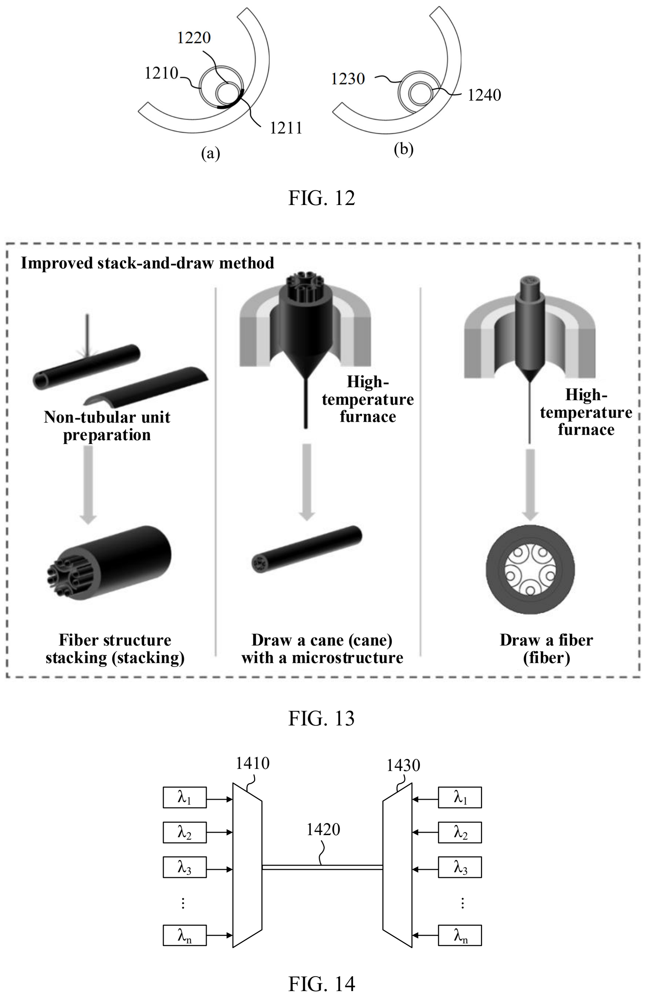

FIG. 12 is a diagram of an optimization principle of a hollow-core fiber structure according to an embodiment of this application. A radial cross section of the hollow-core fiber structure is shown in (a) in FIG. 12. When each microstructure unit includes a first circular structure 1210 and a second circular structure 1220 nested in the first circular structure 1210, an outer arc section 1211 of the first circular structure 1210 does not achieve any optical function. Therefore, the hollow-core fiber structure may be designed as shown in (b) in FIG. 12. Each microstructure unit includes an arc structure 1230 and a circular structure 1240 nested in the arc structure 1230, to reduce a diameter of a microstructure and optimize the microstructure of a cladding layer of a fiber. Therefore, without changing a quantity of microstructure units and a wall thickness of a protection sleeve, a size of the fiber is reduced, and it is further ensured that a low-loss characteristic of the fiber remains unchanged. Further, a diameter reduction amount of the microstructure is precisely adjusted by adjusting a central angle of the arc structure 1230, to achieve a specified diameter of the microstructure within a specific range, and implement continuous and controllable reduction in an outer diameter of the fiber, so that the hollow-core fiber structure in this application can be directly connected to a conventional communication fiber. In some application scenarios that have high requirements on space, for example, a data center and a fiber optic gyroscope, the fiber needs to be bent to a small bending radius. In this case, if the outer diameter of the fiber is large, a risk of breaking the fiber is increased. A bending loss of the fiber can be reduced by using the hollow-core fiber structure in this application. In some application scenarios, the diameter of the microstructure further needs to be specified as a specific value. This requirement can be implemented by using a means of controlling the outer diameter of the fiber by adjusting the arc structure in this application. In conclusion, the hollow-core fiber structure that includes a microstructure unit having a single-layer arc or multi-layer arcs in this application and the means of controlling the outer diameter of the fiber by adjusting the arc structure are used, to reduce and control the size of the fiber while ensuring a low loss of the fiber, so that the hollow-core fiber structure in this application is applicable to wider application scenarios.

FIG. 13 is a diagram of a method for preparing a hollow-core fiber according to an embodiment of this application. The hollow-core fiber in this application may be prepared by using an improved stack-and-draw method. For example, a non-tube structure unit may be prepared by using a method such as laser processing, 3D printing, or chemical corrosion, and is used for stacking of a fiber structure. Then, a two-step drawing method required for preparing a conventional microstructure fiber is used. A stacked structure is drawn into a millimeter-scale cane (cane) with a microstructure, and then the cane is drawn into a micron-scale fiber (fiber) through precise atmospheric pressure adjustment.

FIG. 14 is a diagram of an application scenario of a hollow-core fiber according to an embodiment of this application. A hollow-core fiber structure in this application may be applied to an optical transmission system, including:
an optical transmitter 1410, configured to transmit signal light;
a hollow-core fiber 1420, configured to transmit the signal light, where a structure of the hollow-core fiber 1420 may be shown in FIG. 3 to FIG. 12; and
an optical receiver 1430, configured to receive the signal light.

In some implementations, the optical transmission system may be a fiber communication system that is based on a wavelength division multiplexing communication technology. The optical transmitter may be a single-mode transmitter, configured to transmit signal light with wavelengths of λ₁, λ₂, λ₃, ..., and λₙ. The optical transmitter may be a single-mode receiver, configured to receive the signal light with wavelengths of λ₁, λ₂, λ₃, ..., and λₙ. In a transmission section of the hollow-core fiber 1420, a single-mode optical amplifier may be further adapted, to ensure normal transmission of the signal light. The optical transmission system provided in this application is used, so that an optical signal can be excited, transmitted, amplified, demodulated, and received. In addition, a plurality of wavelength channels are transmitted in one fiber by using a wavelength division multiplexing technology, to separately carry different user information. Alternatively, the optical transmitter and the optical receiver may be configured to send and receive single-wavelength signal light. This is not limited in this application. In a communication system based on the hollow-core fiber, a new hollow-core fiber may be used to replace a conventional single-mode fiber, to achieve a lower transmission delay, a lower transmission signal impairment (dispersion/non-linear impairment, or the like), a wider optical signal transmission spectrum width, and a lower potential transmission loss. In some implementations, a low-loss connection between the hollow-core fiber and a single-mode wavelength division transceiver, the single-mode optical amplifier, or the like may be directly implemented through pigtail splicing, interconnection, or the like, to implement good compatibility between the hollow-core fiber and another single-mode device. In this way, the foregoing performance improvement is brought to a conventional single-mode wavelength division multiplexing communication system, an additional insertion loss of the system is reduced to a maximum extent, and development and introduction of various adapter devices are reduced.

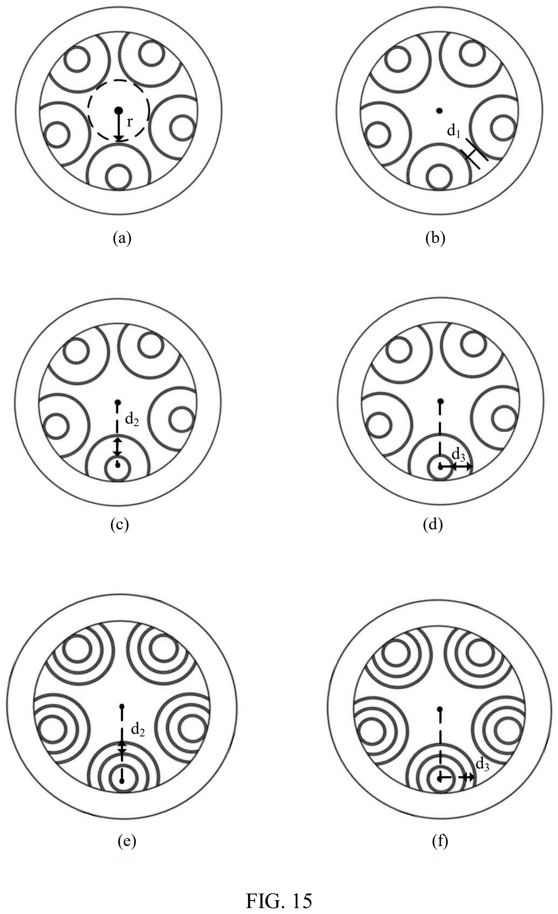

In addition, this application further provides a hollow-core fiber structure shown in FIG. 15 to FIG. 23.

FIG. 15 is a diagram of a structure of a cross section of a fiber according to an embodiment of this application. For ease of description, an example in which a hollow-core fiber includes five microstructure units, each unit has a corresponding first tubular unit and a corresponding second tubular unit, and a radial cross section of the first tubular unit is specifically of a circular structure is used. (a), (b), (c), (d), (e), and (f) in FIG. 15 each are a diagram of the structure of the radial cross section of the fiber. As shown in (a) in the figure, in a hollow-core fiber structure, an effective radius of a fiber core is r (where the effective radius may be understood as a distance from a center of the fiber to a nearest point on the second tubular unit), and a circle formed by rotation with the effective radius r and using a circle center of the hollow-core fiber as a center may be understood as the fiber core of the hollow-core fiber. Arc structures and circular structures in adjacent second tubular units, the second tubular unit, and the first tubular unit corresponding to the second tubular unit may have the following relationships.

As shown in (b) in FIG. 15, there is a spacing between adjacent second tubular units in N second tubular units, and the spacing is less than or equal to half of the effective radius of the fiber core. That is, 0<d₁≤r/2. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing. The spacing between the adjacent second tubular units may be a shortest distance between outer walls of the adjacent second tubular units.

As shown in (c) in FIG. 15, when the second tubular unit includes one arc structure, a radial spacing between the second tubular unit and the corresponding first tubular unit is greater than or equal to one-fifteenth of the effective radius of the fiber core, and is less than or equal to three-seconds of the effective radius of the fiber core. That is, r/15≤d₂≤3r/2. A relationship between the effective radius of the fiber core and the radial spacing between the second tubular unit and the first tubular unit corresponding to the second tubular unit in the hollow-core fiber is determined, so that a function of an anti-resonant reflection wall can be ensured, thereby effectively reducing light leakage. A connection line between a circle center of the fiber core and a circle center of the second tubular unit and an inner circumferential wall of the second tubular unit have a first intersection point, and the connection line and an outer circumferential wall of the first tubular unit have a second intersection point. A distance between the first intersection point and the second intersection point is d₂.

As shown in (d) in FIG. 15, when the second tubular unit includes one arc structure, a spacing between the second tubular unit and the corresponding first tubular unit in a first direction is greater than or equal to one-eighth of the effective radius of the fiber core, and is less than or equal to three-quarters of the effective radius of the fiber core, where the first direction is perpendicular to a connection line between a circle center of the second tubular unit and a circle center of the corresponding first tubular unit, and a straight line in the first direction passes through the circle center of the first tubular unit. That is, r/8≤d₃≤3r/4. A relationship between the effective radius of the fiber core and the spacing between the second tubular unit and the first tubular unit corresponding to the second tubular unit in the direction perpendicular to a radial direction is determined, so that a function of an anti-resonant reflection wall can be ensured, thereby effectively reducing light leakage. A ray that starts from the circle center of the first tubular unit and that is perpendicular to a connection line between a circle center of the fiber core and the circle center of the second tubular unit and an outer wall of the first tubular unit have a third intersection point, and the ray and an inner wall of the second tubular unit have a fourth intersection point. A distance between the third intersection point and the fourth intersection point is d₃.

As shown in (e) in FIG. 15, when the second tubular unit includes a plurality of arc structures, a radial spacing between a first arc structure and a second arc structure is greater than or equal to one-fifteenth of the effective radius of the fiber core, and is less than or equal to three-seconds of the effective radius of the fiber core, where the first arc structure is adjacent to the fiber core, and the second arc structure is adjacent to the first arc structure. That is, r/15≤d₂≤3r/2. A relationship between the effective radius of the fiber core and the radial spacing between the first arc structure and the second arc structure in the hollow-core fiber is determined, so that a function of an anti-resonant reflection wall can be ensured, thereby effectively reducing light leakage. A connection line between a circle center of the fiber core and a circle center of the second arc structure and an inner circumferential wall of the first arc structure have a first intersection point, and the connection line and an outer circumferential wall of the second arc structure have a second intersection point. A distance between the first intersection point and the second intersection point is d₂.

As shown in (f) in FIG. 15, when the second tubular unit includes a plurality of arc structures, a spacing between a first arc structure and a second arc structure in a second direction structure is greater than or equal to one-eighth of the effective radius of the fiber core, and is less than or equal to three-quarters of the effective radius of the fiber core, where the first arc structure is adjacent to the fiber core, the second arc structure is adjacent to the first arc structure, the second direction is perpendicular to a connection line between a circle center of the first arc structure and a circle center of the second arc structure, and a straight line in the second direction passes through the circle center of the second arc structure. That is, r/8≤d₃≤3r/4. A relationship between the effective radius of the fiber core and the spacing between the first arc structure and the second arc structure in the direction perpendicular to a radial direction is determined, so that a function of an anti-resonant reflection wall can be ensured, thereby effectively reducing light leakage. A ray that starts from the circle center of the second arc structure and that is perpendicular to a connection line between a circle center of the fiber core and the circle center of the second arc structure and an outer wall of the second arc structure have a third intersection point, and the ray and an inner wall of the first arc structure have a fourth intersection point. A distance between the third intersection point and the fourth intersection point is d₃.

In addition, for related meanings of the fiber core, the fiber core radius, d₁, d₂, and d₃ described in FIG. 3, refer to corresponding descriptions in FIG. 15 for understanding.

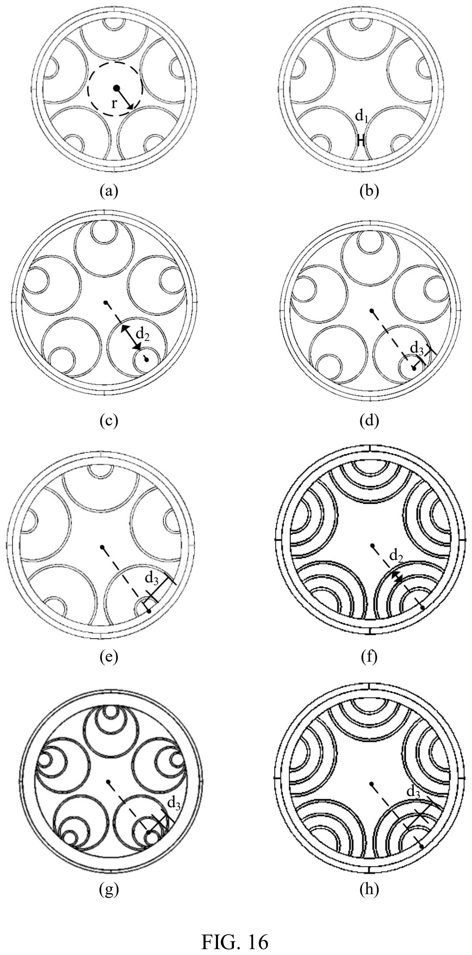

With reference to FIG. 16, the following describes a design of a hollow-core fiber structure in which a first tubular unit is of an arc structure in this application.

FIG. 16 is a diagram of a structure of a cross section of another fiber according to an embodiment of this application. For ease of description, an example in which a hollow-core fiber includes five microstructure units, each unit has a corresponding first tubular unit and a corresponding second tubular unit, and a radial cross section of the first tubular unit specifically includes at least one arc structure is used. (a), (b), (c), (d), (e), (f), (g), and (h) in FIG. 16 each are a diagram of the structure of the radial cross section of the fiber. As shown in (a) in FIG. 16, in a hollow-core fiber structure, an effective radius of a fiber core is r (where the effective radius may be understood as a distance from a center of the fiber to a nearest point on the second tubular unit), and a circle formed by rotation with the effective radius r and using a circle center of the hollow-core fiber as a center may be understood as the fiber core of the hollow-core fiber. Arc structures and circular structures in adjacent second tubular units, the second tubular unit, and the first tubular unit corresponding to the second tubular unit may have the following relationships.

As shown in (b) in FIG. 16, there is a spacing between adjacent second tubular units in N second tubular units, and the spacing is less than or equal to half of the radius of the fiber core. That is, 0<d₁≤r/2. A relationship between the effective radius of the fiber core and the spacing between the adjacent second tubular units in the hollow-core fiber is determined, so that contact between the second tubular units can be avoided, and the spacing between the second tubular units is not excessively large, thereby effectively suppressing light leakage from the spacing.

As shown in (c) and (f) in FIG. 16, a radial spacing between a first arc structure and a second arc structure is greater than or equal to one-fifth of the effective radius of the fiber core, and is less than or equal to three-seconds of the effective radius of the fiber core, where the first arc structure is adjacent to the fiber core, and the second arc structure is adjacent to the first arc structure. That is, r/5≤d₂≤3r/2. (c) in FIG. 16 specifically shows a case in which the first tubular unit and the second tubular unit include two arc structures in total. (f) in FIG. 16 specifically shows a case in which the first tubular unit and the second tubular unit include three arc structures in total. A relationship between the effective radius of the fiber core and the radial spacing between the first arc structure and the second arc structure in the hollow-core fiber is determined, so that a function of an anti-resonant reflection wall can be ensured, thereby effectively reducing light leakage. A connection line between a circle center of the fiber core and a circle center of the second arc structure and an inner circumferential wall of the first arc structure have a first intersection point, and the connection line and an outer circumferential wall of the second arc structure have a second intersection point. A distance between the first intersection point and the second intersection point is d₂.

As shown in (d), (e), (g), and (h) in FIG. 16, a spacing between a first arc structure and a second arc structure in a second direction is greater than or equal to one-eighth of the effective radius of the fiber core, and is less than or equal to three-fifths of the effective radius of the fiber core, where the first arc structure is adjacent to the fiber core, and the second arc structure is adjacent to the first arc structure. That is, r/8≤d₃≤3r/5. (d) and (e) in FIG. 16 specifically show a case in which the first tubular unit and the second tubular unit include two arc structures in total. (g) and (h) in FIG. 16 specifically show a case in which the first tubular unit and the second tubular unit include three arc structures in total. As shown in (d) and (g) in FIG. 16, when a circle center of the second arc structure is within a range enclosed by a protection sleeve, the second direction is perpendicular to a connection line between a circle center of the first arc structure and the circle center of the second arc structure, and a straight line in the second direction passes through the circle center of the second arc structure. As shown in (e) and (h) in FIG. 16, when a circle center of the second arc structure is outside a range enclosed by a protection sleeve, in a straight line perpendicular to a connection line between a circle center of the first arc structure and the circle center of the second arc structure, there is a shortest distance between an intersection point of a straight line in the second direction and the first arc structure and an intersection point of the straight line in the second direction and the second arc structure. That is, as shown in (d) and (g) in FIG. 16, a ray that starts from the circle center of the second arc structure and that is perpendicular to a connection line between a circle center of the fiber core and the circle center of the second arc structure and an outer wall of the second arc structure have a third intersection point, and the ray and an inner wall of the first arc structure have a fourth intersection point. A distance between the third intersection point and the fourth intersection point is d₃. In addition, in some cases, the circle center of the second arc structure is not within the range of the protection sleeve. In this case, as shown in (g) and (h) in FIG. 16, d₃ may be a shortest distance between an outer circumferential wall of the second arc structure and an inner circumferential wall of the first arc structure in a straight line perpendicular to the connection line between the circle center of the fiber core and the circle center of the second arc structure.

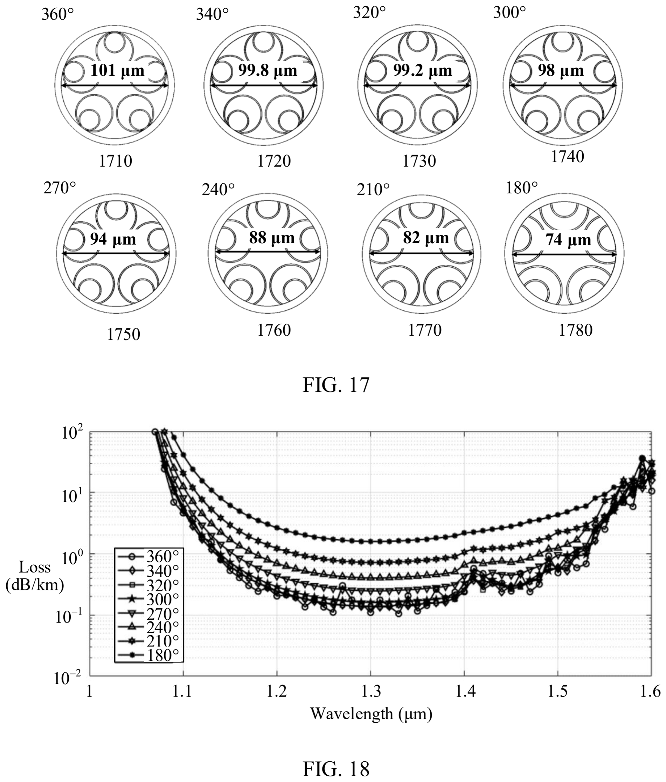

With reference to FIG. 17 to FIG. 22, the following specifically describes adjustment of a hollow-core fiber in this application. In this application, a central angle corresponding to an arc structure in a first tubular unit and a central angle corresponding to an arc structure in a second tubular unit may be adjusted, to effectively reduce a size of the fiber while ensuring a low-loss advantage of the hollow-core fiber.

FIG. 17 is a diagram of a hollow-core fiber structure in which an arc structure is adjusted according to an embodiment of this application. A fiber core has a radius r of 15 µm and a diameter of 30 µm. A hollow-core fiber includes five microstructure units, and wall thicknesses of a first tubular unit and a second tubular unit each are 1 µm. A radial cross section of the first tubular unit includes one arc structure. A radial cross section of the second tubular unit includes one arc structure. As shown in FIG. 17, in a fiber structure 1710, central angles of arc structures respectively included in cross sections of a first tubular unit and a second tubular unit are 360°, and in this case, an overall diameter of a corresponding fiber is 101 µm; in a fiber structure 1720, central angles respectively included in cross sections of a first tubular unit and a second tubular unit are 340°, and in this case, an overall diameter of a corresponding fiber is 99.8 µm; in a fiber structure 1730, central angles respectively included in cross sections of a first tubular unit and a second tubular unit are 320°, and in this case, an overall diameter of a corresponding fiber is 99.2 µm; in a fiber structure 1740, central angles respectively included in cross sections of a first tubular unit and a second tubular unit are 300°, and in this case, an overall diameter of a corresponding fiber is 98 µm; in a fiber structure 1750, central angles respectively included in cross sections of a first tubular unit and a second tubular unit are 270°, and in this case, an overall diameter of a corresponding fiber is 94 µm; in a fiber structure 1760, central angles respectively included in cross sections of a first tubular unit and a second tubular unit are 240°, and in this case, an overall diameter of a corresponding fiber is 88 µm; in a fiber structure 1770, central angles respectively included in cross sections of a first tubular unit and a second tubular unit are 210°, and in this case, an overall diameter of a corresponding fiber is 82 µm; and in a fiber structure 1780, central angles respectively included in cross sections of a first tubular unit and a second tubular unit are 180°, and in this case, an overall diameter of a corresponding fiber is 74 µm.

FIG. 18 shows a loss spectrum corresponding to hollow-core fiber structure adjustment according to an embodiment of this application. Corresponding to FIG. 17 when central angles respectively included in the cross sections of the first tubular unit and the second tubular unit are 300° to 360°, a confinement loss less than 0.2 dB/km may be implemented in a band in which a light wavelength is 1180 nm to 1380 nm. When central angles respectively included in the cross sections of the first tubular unit and the second tubular unit are 210° to 270°, a confinement loss about 0.1 dB/km to 1 dB/km may be implemented in a band in which a light wavelength is 1180 nm to 1380 nm.

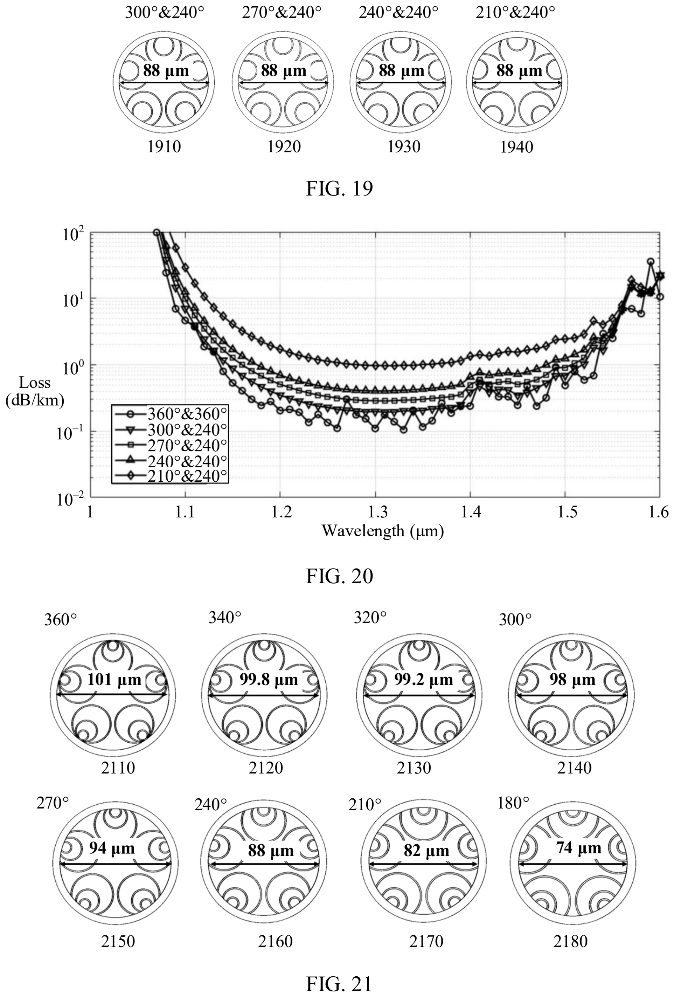

FIG. 19 is another diagram of a hollow-core fiber structure in which an arc structure is adjusted according to an embodiment of this application. A fiber core has a radius r of 19 µm and a diameter of 30 µm. A hollow-core fiber includes five microstructure units, and wall thicknesses of a first tubular unit and a second tubular unit each are 1 µm. A radial cross section of the first tubular unit includes one arc structure. A radial cross section of the second tubular unit includes one arc structure. As shown in FIG. 19, the arc structure included in the cross section of the first tubular unit and the arc structure included in the cross section of the second tubular unit may correspond to different central angles. In a fiber structure 1910, a central angle of an arc structure included in a first tubular unit is 300°, and a central angle of an arc structure included in a cross section of a second tubular unit is 240°. In this case, an overall diameter of a corresponding fiber is 88 µm. In a fiber structure 1920, a central angle of an arc structure included in a first tubular unit is 270°, and a central angle of an arc structure included in a cross section of a second tubular unit is 240°. In this case, an overall diameter of a corresponding fiber is 88 µm. In a fiber structure 1930, a central angle of an arc structure included in a first tubular unit is 240°, and a central angle of an arc structure included in a cross section of a second tubular unit is 240°. In this case, an overall diameter of a corresponding fiber is 88 µm. In a fiber structure 1940, a central angle of an arc structure included in a first tubular unit is 210°, and a central angle of an arc structure included in a cross section of a second tubular unit is 240°. In this case, an overall diameter of a corresponding fiber is 88 µm.

FIG. 20 shows a loss spectrum corresponding to hollow-core fiber structure adjustment according to an embodiment of this application. FIG. 20 corresponds to FIG. 19. It can be learned from FIG. 20 that, when a central angle of the arc structure included in the first tubular unit is greater than a central angle of the arc structure included in the second tubular unit, a confinement loss is reduced in comparison with a case in which the central angle of the arc structure included in the first tubular unit is equal to the central angle of the arc structure included in the second tubular unit in FIG. 17. When a central angle of the arc structure included in the first tubular unit is less than a central angle of the arc structure included in the second tubular unit, a confinement loss is increased in comparison with a case in which the central angle of the arc structure included in the first tubular unit is equal to the central angle of the arc structure included in the second tubular unit in FIG. 17. Therefore, when the central angle of the arc structure included in the first tubular unit is greater than the central angle of the arc structure included in the second tubular unit, a size of the fiber can be effectively reduced, thereby ensuring a low-loss advantage of the hollow-core fiber.

FIG. 21 is another diagram of a hollow-core fiber structure in which an arc structure is adjusted according to an embodiment of this application. A fiber core has a radius r of 15 µm and a diameter of 30 µm. A hollow-core fiber includes five microstructure units, and wall thicknesses of a first tubular unit and a second tubular unit each are 1 µm. A radial cross section of the first tubular unit includes two arc structures. A radial cross section of the second tubular unit includes one arc structure. Alternatively, it may be understood as that a radial cross section of the first tubular unit includes one arc structure. A radial cross section of the second tubular unit includes two arc structures. As shown in FIG. 21, central angles of a three-layer arc structure in a fiber structure 2110 are 360°, and in this case, an overall diameter of a corresponding fiber is 101 µm; central angles of a three-layer arc structure in a fiber structure 2120 are 340°, and in this case, an overall diameter of a corresponding fiber is 99.8 µm; central angles of a three-layer arc structure in a fiber structure 2130 are 320°, and in this case, an overall diameter of a corresponding fiber is 99.2 µm; central angles of a three-layer arc structure in a fiber structure 2140 are 300°, and in this case, an overall diameter of a corresponding fiber is 98 µm; central angles of a three-layer arc structure in a fiber structure 2150 are 270°, and in this case, an overall diameter of a corresponding fiber is 94 µm; central angles of a three-layer arc structure in a fiber structure 2160 are 240°, and in this case, an overall diameter of a corresponding fiber is 88 µm; central angles of a three-layer arc structure in a fiber structure 2170 are 210°, and in this case, an overall diameter of a corresponding fiber is 82 µm; and central angles of a three-layer arc structure in a fiber structure 2180 are 180°, and in this case, an overall diameter of a corresponding fiber is 74 µm.

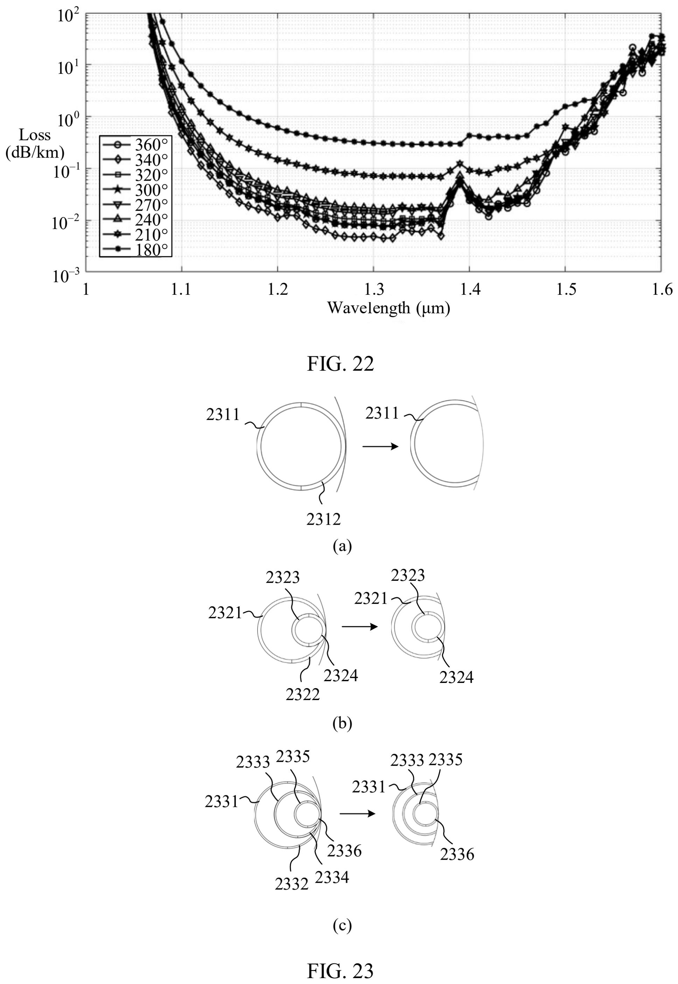

FIG. 22 shows a loss spectrum corresponding to hollow-core fiber structure adjustment according to an embodiment of this application. Corresponding to FIG. 21, when central angles of a three-layer arc structure are 240° to 360°, a confinement loss less than 0.1 dB/km may be implemented in a band in which a light wavelength is 1180 nm to 1380 nm. When central angles of a three-layer arc structure are 210°, a confinement loss less than 0.2 dB/km may be implemented in a band in which a light wavelength is 1180 nm to 1380 nm. In this case, the fiber structure meets an ultra-low loss fiber standard.

In addition, the central angles of the three-layer arc structure shown in FIG. 21 may alternatively be different, which is similar to that in FIG. 19. Details are not described herein again.

FIG. 23 is a diagram of an optimization principle of a hollow-core fiber structure according to an embodiment of this application. When a radial cross section of each microstructure unit in the hollow-core fiber structure is shown in (a) in FIG. 23, and includes only a plurality of arc structures, that is, when a first tubular unit is not disposed and only a second tubular unit is disposed, because the second tubular unit includes only a tube wall 2311 and does not include a tube wall 2312, an anti-resonant function cannot be achieved, and therefore a loss significantly increases.

When a radial cross section of each microstructure unit in the hollow-core fiber structure is shown in (b) in FIG. 23, and includes a first tubular unit and a second tubular unit, the first tubular unit includes a tube wall 2323 and a tube wall 2324, where the tube wall 2323 and the tube wall 2324 can perform an anti-resonant reflection function. Therefore, when the second tubular unit includes only a tube wall 2321 and does not include a tube wall 2322, it can also be ensured that impact on a fiber loss is small, and a size of the fiber is effectively reduced. In addition, when the second tubular unit does not include the tube wall 2322, and the first tubular unit does not include the tube wall 2324, it can also be ensured that impact on the fiber loss is small, and the size of the fiber is further effectively reduced.

When a radial cross section of each microstructure unit in the hollow-core fiber structure is shown in (c) in FIG. 23, and a second tubular unit includes a plurality of arc structures, a first tubular unit includes a tube wall 2335 and a tube wall 2336, where the tube wall 2335 and the tube wall 2336 can perform an anti-resonant reflection function. Therefore, when the second tubular unit includes only tube walls 2331 and 2333 and does not include a tube wall 2332 or a tube wall 2334, it can also be ensured that impact on a fiber loss is small, and a size of the fiber is effectively reduced. In addition, when the second tubular unit does not include the tube wall 2332 or the tube wall 2334, and the first tubular unit does not include the tube wall 2336, it can also be ensured that impact on the fiber loss is small, and the size of the fiber is further effectively reduced.

In addition, a diameter reduction amount of a microstructure is precisely adjusted by continuously adjusting a central angle included in a cross section of the first tubular unit and/or a central angle included in a cross section of the second tubular unit, to achieve a specified diameter of the microstructure within a specific range, and implement continuous and controllable reduction in an outer diameter of the fiber, so that the hollow-core fiber structure in this application can be directly connected to a conventional communication fiber. In some application scenarios that have high requirements on space, for example, a data center and a fiber optic gyroscope, the fiber needs to be bent to a small bending radius. In this case, if the outer diameter of the fiber is large, a risk of breaking the fiber is increased. A bending loss of the fiber can be reduced by using the hollow-core fiber structure in this application. In some application scenarios, the diameter of the microstructure further needs to be specified as a specific value. This requirement can be implemented by using a means of controlling the outer diameter of the fiber by adjusting the arc structure in this application. In conclusion, the hollow-core fiber structure that includes a microstructure unit having a single-layer arc or multi-layer arcs in this application and the means of controlling the outer diameter of the fiber by adjusting the arc structure are used, to reduce and control the size of the fiber while ensuring a low loss of the fiber, so that the hollow-core fiber structure in this application is applicable to wider application scenarios.

It should be understood that various numerical symbols in this specification are merely used for differentiation for ease of descriptions, and are not used to limit the scope of this application.

The technical features in the foregoing embodiments may be combined in any manner. To make the description brief, all possible combinations of the technical features in the foregoing embodiments are not described. However, provided that the combinations of the technical features do not conflict with each other, it should be considered as the scope recorded in this specification.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hollow-core fiber, comprising N first tubular units, N second tubular units, and a protection sleeve, wherein
the N first tubular units are arranged circumferentially and abut against the protection sleeve;
the N second tubular units are in one-to-one correspondence with the N first tubular units, and each of the N first tubular units is nested in a corresponding second tubular unit, to form, together with the second tubular unit, a cladding layer that confines light beam propagation within a fiber core; and
a cross section of the second tubular unit comprises at least one arc structure, a first endpoint and a second endpoint of each of the at least one arc structure are in contact with the protection sleeve, a central angle of the arc structure is 180 degrees to 340 degrees, and N is a positive integer greater than or equal to 5.

2. The hollow-core fiber according to claim 1, wherein the central angle of the arc structure is 180 degrees to 300 degrees.

3. The hollow-core fiber according to claim 1 or 2, wherein the central angle of the arc structure is 210 degrees to 270 degrees.

4. The hollow-core fiber according to any one of claims 1 to 3, wherein the N first tubular units are arranged circumferentially and symmetrically.

5. The hollow-core fiber according to any one of claims 1 to 4, wherein when the at least one arc structure comprises a plurality of arc structures, there is a gap between any two adjacent arc structures in the plurality of arc structures.

6. The hollow-core fiber according to any one of claims 1 to 5, wherein a cross section of the first tubular unit comprises one or more closed-shape structures.

7. The hollow-core fiber according to any one of claims 1 to 6, wherein the cross section of the first tubular unit is of a circular structure.

8. The hollow-core fiber according to claim 7, wherein there is a spacing between adjacent second tubular units in the N second tubular units, and the spacing is less than or equal to half of an effective radius of the fiber core.

9. The hollow-core fiber according to claim 7, wherein there is a spacing between adjacent second tubular units in the N second tubular units, and the spacing is less than or equal to one-third of an effective radius of the fiber core.

10. The hollow-core fiber according to any one of claims 7 to 9, wherein
when the second tubular unit comprises one arc structure, a radial spacing between the second tubular unit and the corresponding first tubular unit is greater than or equal to one-fifteenth of the effective radius of the fiber core, and is less than or equal to three-seconds of the effective radius of the fiber core; or
when the second tubular unit comprises a plurality of arc structures, a radial spacing between a first arc structure and a second arc structure is greater than or equal to one-fifteenth of the effective radius of the fiber core, and is less than or equal to three-seconds of the effective radius of the fiber core, wherein the first arc structure is adjacent to the fiber core, and the second arc structure is adjacent to the first arc structure.

11. The hollow-core fiber according to any one of claims 7 to 9, wherein
when the second tubular unit comprises one arc structure, a radial spacing between the second tubular unit and the corresponding first tubular unit is greater than or equal to one-sixth of the effective radius of the fiber core, and is less than or equal to half of the effective radius of the fiber core; or
when the second tubular unit comprises a plurality of arc structures, a radial spacing between a first arc structure and a second arc structure is greater than or equal to one-sixth of the effective radius of the fiber core, and is less than or equal to half of the effective radius of the fiber core, wherein the first arc structure is adjacent to the fiber core, and the second arc structure is adjacent to the first arc structure.

12. The hollow-core fiber according to any one of claims 7 to 11, wherein
when the second tubular unit comprises one arc structure, a spacing between the second tubular unit and the corresponding first tubular unit in a first direction is greater than or equal to one-eighth of the effective radius of the fiber core, and is less than or equal to three-quarters of the effective radius of the fiber core, wherein the first direction is perpendicular to a connection line between a circle center of the second tubular unit and a circle center of the corresponding first tubular unit, and a straight line in the first direction passes through the circle center of the first tubular unit; or
when the second tubular unit comprises a plurality of arc structures, a spacing between a first arc structure and a second arc structure in a second direction is greater than or equal to one-eighth of the effective radius of the fiber core, and is less than or equal to three-quarters of the effective radius of the fiber core, wherein the first arc structure is adjacent to the fiber core, the second arc structure is adjacent to the first arc structure, the second direction is perpendicular to a connection line between a circle center of the first arc structure and a circle center of the second arc structure, and a straight line in the second direction passes through the circle center of the second arc structure.

13. The hollow-core fiber according to any one of claims 7 to 11, wherein
when the second tubular unit comprises one arc structure, a spacing between the second tubular unit and the corresponding first tubular unit in a first direction is greater than or equal to one-eighth of the effective radius of the fiber core, and is less than or equal to half of the effective radius of the fiber core, wherein the first direction is perpendicular to a connection line between a circle center of the second tubular unit and a circle center of the corresponding first tubular unit, and a straight line in the first direction passes through the circle center of the first tubular unit; or
when the second tubular unit comprises a plurality of arc structures, a spacing between a first arc structure and a second arc structure in a second direction is greater than or equal to one-eighth of the effective radius of the fiber core, and is less than or equal to half of the effective radius of the fiber core, wherein the first arc structure is adjacent to the fiber core, the second arc structure is adjacent to the first arc structure, the second direction is perpendicular to a connection line between a circle center of the first arc structure and a circle center of the second arc structure, and a straight line in the second direction passes through the circle center of the second arc structure.

14. The hollow-core fiber according to any one of claims 1 to 5, wherein a cross section of the first tubular unit comprises at least one arc structure.

15. The hollow-core fiber according to claim 14, wherein there is a spacing between adjacent second tubular units in the N second tubular units, and the spacing is less than or equal to half of an effective radius of the fiber core.

16. The hollow-core fiber according to claim 14 or 15, wherein a radial spacing between a first arc structure and a second arc structure is greater than or equal to one-fifth of the effective radius of the fiber core, and is less than or equal to three-seconds of the effective radius of the fiber core, wherein the first arc structure is adjacent to the fiber core, and the second arc structure is adjacent to the first arc structure.

17. The hollow-core fiber according to any one of claims 14 to 16, wherein a spacing between the first arc structure and the second arc structure in a second direction is greater than or equal to one-eighth of the effective radius of the fiber core, and is less than or equal to three-fifths of the effective radius of the fiber core, wherein the first arc structure is adjacent to the fiber core, and the second arc structure is adjacent to the first arc structure; and
when a circle center of the second arc structure is within a range enclosed by the protection sleeve, the second direction is perpendicular to a connection line between a circle center of the first arc structure and the circle center of the second arc structure, and a straight line in the second direction passes through the circle center of the second arc structure; or
when a circle center of the second arc structure is outside a range enclosed by the protection sleeve, in a straight line perpendicular to a connection line between a circle center of the first arc structure and the circle center of the second arc structure, there is a shortest distance between an intersection point of a straight line in the second direction and the first arc structure and an intersection point of the straight line in the second direction and the second arc structure.

18. The hollow-core fiber according to any one of claims 1 to 17, wherein a difference between wall thicknesses of the first tubular unit and the second tubular unit is within 10%.

19. An optical transmission system, comprising:
an optical transmitter, configured to transmit signal light;
the hollow-core fiber according to any one of claims 1 to 18, configured to transmit the signal light; and
an optical receiver, configured to receive the signal light.
